Europäisches Patentamt

European Patent Office

Office européen des brevets

(19)

(11) Numéro de publication : **0 454 577 A1**

(12)

# DEMANDE DE BREVET EUROPEEN

(21) Numéro de dépôt : 91401090.5

(51) Int. Cl.⁵ : **C10B 31/04, B65G 69/18**

(22) Date de dépôt : 24.04.91

(30) Priorité : 26.04.90 FR 9005336

(43) Date de publication de la demande :
30.10.91 Bulletin 91/44

(84) Etats contractants désignés :
AT BE DE ES FR GB IT LU NL

(71) Demandeur : SOLLAC
Immeuble Elysées La Défense, 29 Le Parvis
F-92800 PUTEAUX (FR)

(72) Inventeur : Marousez,Jean-Marc
33 Avenue du 8 Juin 1940
F-59640 Petite Synthe (FR)
Inventeur : Kociszewski,Edmond
Villa Boff Route de Bergues
F-59470 Esquelbecq (FR)

(74) Mandataire : Lanceplaine, Jean-Claude et al
CABINET LAVOIX 2, Place d'Estienne d'Orves
F-75441 Paris Cédex 09 (FR)

(54) Dispositif d'enfournement de charbon dans les chambres d'une batterie de fours de cokéfaction.

(57)    La présente invention a pour objet un dispositif d'enfournement de charbon dans les chambres (2) d'une batterie (1) de fours de cokéfaction comportant plusieurs trémies de remplissage composées de tubes télescopiques étanches comprenant un tube fixe (10) et au moins un tube mobile (11,12) associé à des moyens de relevage et de déploiement dudit tube mobile, ledit tube mobile étant muni à sa partie inférieure de moyens de raccordement (20) avec une bouche d'enfournement (3) desdites chambres (2), caractérisé en ce que les moyens de raccordement (20) sont formés par une pièce (21) de forme sensiblement tronconique évidée, mobile par rapport au tube mobile (11,12) et comportant des organe (22,23) de retenue et de recentrage par rapport audit tube mobile (11,12) après chaque enfournement.

EP 0 454 577 A1

**FIG.1**

-2-

La présente invention a pour objet un dispositif d'enfournement de charbon dans les chambres d'une batterie de fours de cokéfaction.

On sait que, lors de l'enfournement de charbon dans les chambres d'une batterie de fours de cokéfaction, opération qui s'effectue ordinairement au moyen d'une enfourneuse mobile sur la plancher supérieur de la batterie de fours, il se forme un mélange gaz-poussière contenant une forte proportion de poussières de charbon en suspension.

Or, le mélange gaz-poussière qui apparait lors de l'enfournement du charbon dans les chambres d'une batterie de fours de cokéfaction ne doit pas s'échapper librement dans l'atmosphère.

On connait des dispositifs qui ont pour but d'empêcher de laisser s'échapper d'une manière incontrôlée dans l'atmosphère les gaz apparaissant pendant l'enfournement de charbon dans les chambres d'une batterie de fours de cokéfaction.

Les dispositifs d'enfournement connus comportent plusieurs trémies de remplissage composées de tubes télescopiques comprenant un tube fixe et au moins un tube mobile associé à des moyens de relevage et de déploiement dudit tube mobile.

Ce tube mobile est muni à sa partie inférieure de moyens de raccordement avec la bouche d'enfournement des chambres de la batterie de fours de cokéfaction.

Ces moyens de raccordement sont constitués par une pièce métallique de forme, solidaire du tube mobile, en partie basse, ou par une pièce indépendante rapportée au moment de la descente du tube mobile ou encore par un système à ressorts et membrane qui impose des réglages.

Mais, les moyens de raccordement utilisés jusqu'à présent ne permettent pas d'accepter une déformation de la planéité de la paroi supérieure de la batterie de fours, ni une imprécision de positionnement de l'enfourneuse si bien que l'échappement des gaz dans l'atmosphère n'est pas complètement empêché.

La présente invention a pour but de proposer un dispositif d'enfournement qui empêche d'une manière sûre, par des moyens simples, tout échappement incontrôlé des gaz hors des chambres pendant l'enfournement.

Le dispositif d'enfournement selon l'invention comportant plusieurs trémies de remplissage composées de tubes télescopiques étanches comprenant un tube fixe et au moins un tube mobile associé à des moyens de relevage et de déploiement dudit tube mobile, ledit tube mobile étant muni à sa partie inférieure de moyens de raccordement avec la bouche d'enfournement desdites chambres, est caractérisé en ce que les moyens de raccordement sont formés par une pièce de forme sensiblement tronconique évidée, mobile par rapport au tube mobile et comportant des organes de retenue et de recentrage par rapport audit tube mobile après chaque enfournement.

Selon d'autres caractéristiques de l'invention :
– les organes de recentrage comportent une jupe solidaire de la pièce de forme sensiblement tronconique et susceptible de coopérer avec une portée de forme complémentaire à ladite jupe et solidaire du tube mobile,
– le tube mobile exerce une pression sur la pièce de forme sensiblement tronconique par l'intermédiaire de la portée et applique ladite pièce uniformément sur la bouche d'enfournement,
– un joint d'étanchéité inférieur flexible résistant bien aux hautes températures est interposé entre la pièce de forme sensiblement tronconique et le tube mobile,
– la pièce de forme sensiblement tronconique est formée par une couronne en acier réfractaire comportant un profil extérieur sensiblement conique,
– un joint d'étanchéité supérieur flexible résistant aux hautes températures est disposé au niveau du plan de chevauchement du tube mobile et du tube fixe,
– le joint d'étanchéité supérieur est formé par un joint gonflable commandé par les moyens de relevage et de déploiement du tube mobile,
– le joint d'étanchéité est formé par un soufflet,
– le dispositif comporte deux tubes mobiles concentriques associés chacun à des moyens de relevage et de déploiement.

L'invention va être décrite plus en détail ci-dessous en se référant aux dessins annexés donnés uniquement à titre d'exemple et sur lesquels :
– la Fig. 1 est une vue schématique en coupe suivant la ligne 1-1 de la Fig. 3, montrant le dispositif selon l'invention, en position d'enfournement du charbon dans une batterie de fours de cokéfaction,
– la Fig. 2 est une vue schématique en coupe du dispositif selon l'invention, en position relevée,
– la Fig. 3 est une vue de dessus de la Fig. 1,
– la Fig. 4 est une vue partielle en coupe d'une variante du dispositif selon l'invention.

Dans un but de simplification, on a représenté sur les figures uniquement une trémie de remplissage constituant la partie inférieure d'une enfourneuse de charbon et située sur une chambre 2 d'une batterie 1 de fours de cokéfaction.

La batterie 1 de fours de cokéfaction comporte, bien évidemment, plusieurs chambres 2, et l'enfourneuse déplaçable sur le plancher supérieur de la batterie 1, comporte plusieurs trémies de remplissage qui sont raccordables aux bouches d'enfournement des chambres 2.

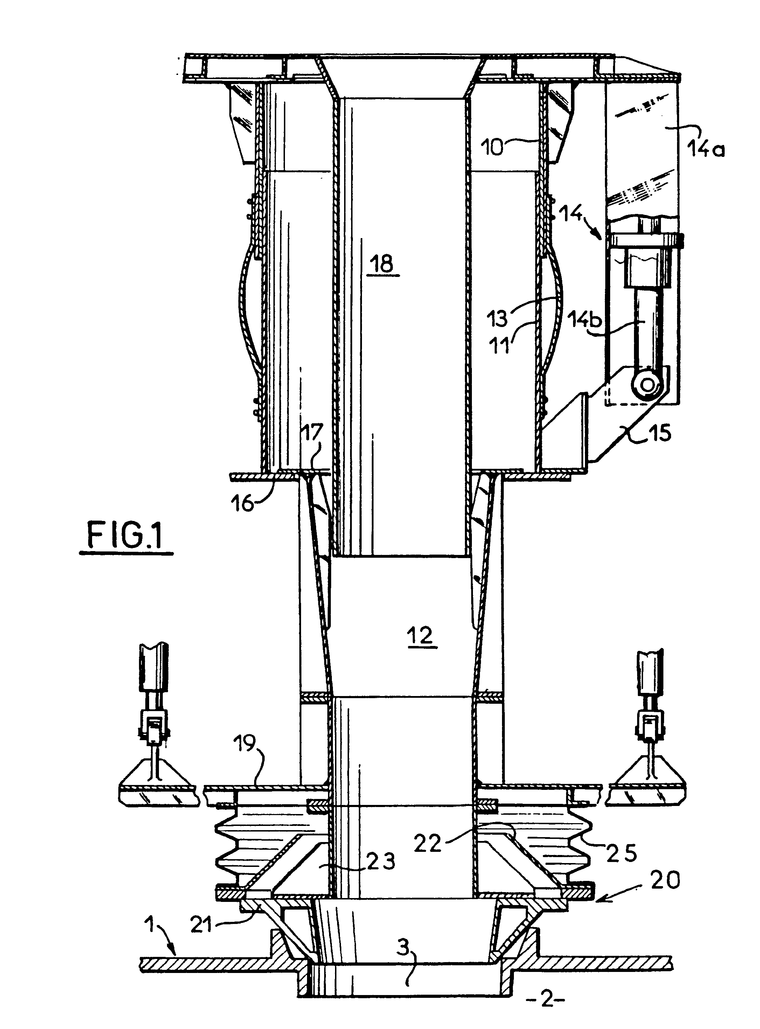

En se reportant maintenant aux Figs. 1 à 3, on va décrire le dispositif d'enfournement selon l'invention.

Ce dispositif d'enfournement est formé de tubes télescopiques étanches comprenant un tube fixe 10 solidaire de l'enfourneuse non représentée, un premier tube mobile 11 coulissant dans ledit tube fixe 10 et un second tube mobile 12 coulissant dans ledit premier tube mobile 11.

Un joint d'étanchéité supérieur 13 résistant aux hautes températures consitutés par exemple par une jupe flexible ou un soufflet est placé autour du plan de chevauchement des tubes 10 et 11. Ce joint d'étanchéité supérieur 13 a un débattement suffisant pour permettre au premier tube mobile 11 de coulisser librement dans le tube fixe 10.

Le premier tube mobile 11 est associé à des moyens de relevage constitués par exemple par des vérins 14 hydrauliques ou pneumatiques.

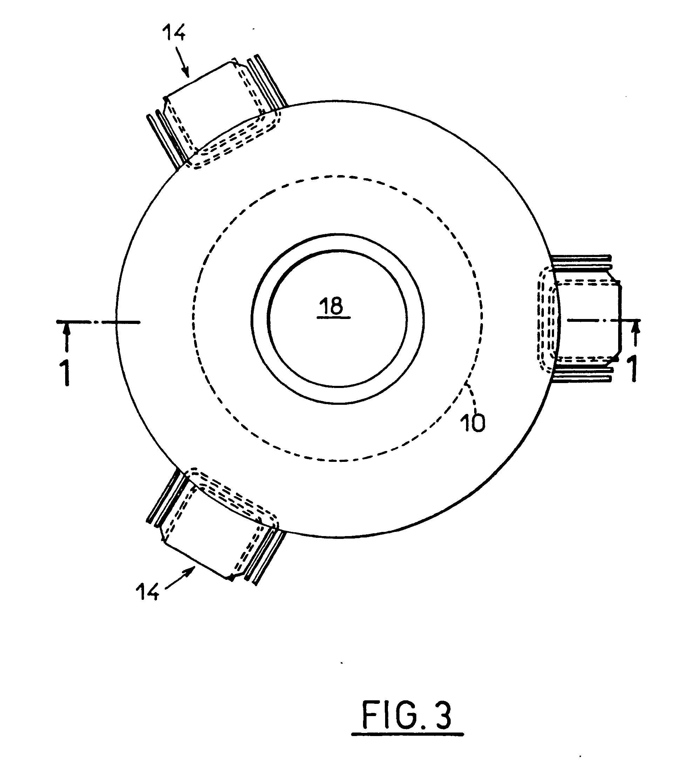

Les vérins 14 qui sont, par exemple au nombre de trois uniformément répartis autour du tube fixe 10 (Fig. 3), comportent un corps 14a solidaire d'une partie fixe de l'enfourneuse et un piston 14b dont l'extrémité est reliée au premier tube mobile 11 par l'intermédiaire des pattes 15.

Le premier tube mobile 11 est muni à sa partie inférieure d'un anneau 16 dont l'alésage est légèrement supérieur au diamètre externe du second tube mobile 12 et ledit second tube 12 est muni à sa partie supérieure d'une collerette 17 de telle sorte que, en position déployée comme représentée à la Fig. 1, la collerette 17 soit en appui sur l'anneau 16.

Le dispositif comporte également un conduit interne 18 qui traverse le tube fixe 10 et le premier tube mobile 11 et qui débouche à l'intérieur du second tube mobile 12 de façon à former un écoulement sensiblement continu du charbon entre la trémie et la chambre 2 de la batterie de fours de cokéfaction.

Le second tube mobile 12 est associé, par l'intermédiaire d'une bride 19, à des moyens de relevage et de déploiement, non représentés, constitués par exemple par des vérins hydrauliques ou pneumatiques ou par tout autre moyen.

Le second tube mobile 12 est muni à sa base de moyens de raccordement 10 avec la bouche d'enfournement 3.

Ces moyens de raccordement 20 comprennent une pièce 21 de forme sensiblement tronconique évidée, mobile par rapport au second tube 12.

La pièce 21 est formée par une couronne par exemple en acier réfractaire comportant un profil extérieur sensiblement conique.

Cette pièce 21 est associée à des moyens de retenue et de recentrage par rapport au second tube mobile 12, constitués par une jupe 22, par exemple conique, solidaire de ladite pièce 21 et susceptible de coopérer avec une portée 23 de forme complémentaire à ladite jupe et solidaire du second tube mobile 12.

Un joint d'étanchéité inférieur 25 flexible et résistant bien aux hautes températures, par exemple un soufflet, est interposé entre la pièce 21 et la bride 19 du second tube mobile 12.

Le dispositif d'enfournement ainsi décrit permet d'amener le charbon dans les chambres 2 à l'aide des tubes télescopiques 10, 11 et 12.

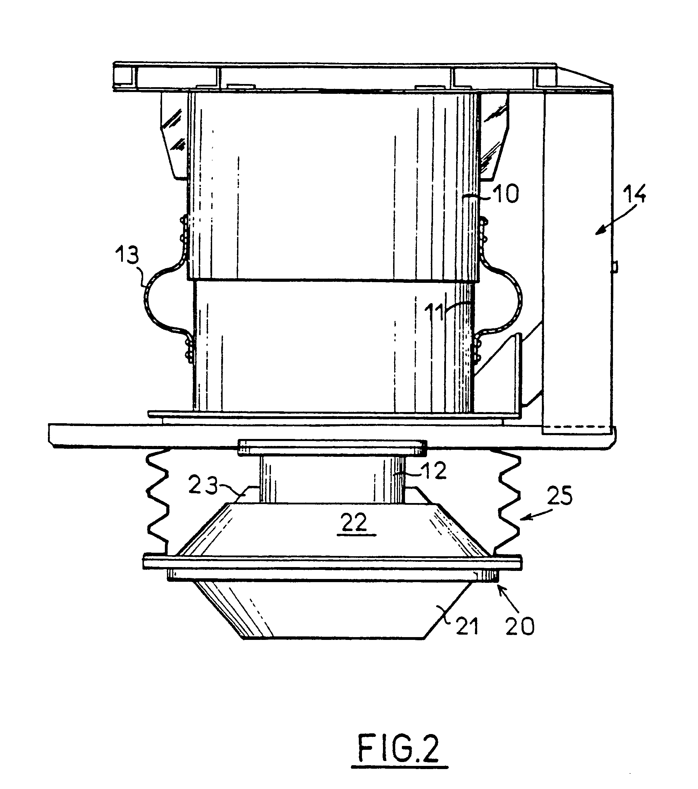

Avant l'enfournement, les vérins maintiennent les tubes mobiles 11 et 12 en position relevée comme représenté sur la Fig. 2.

Dans cette position, la pièce 21 est maintenue relevée à l'aide de la jupe 22 qui est en appui sur la portée 23.

Au moment de l'enfournement du charbon, dans les chambres 2, les vérins associés à chaque tube mobile 11 et 12 déployent lesdits tubes mobiles de telle sorte que, d'une part, la collerette 17 du second tube mobile 12 vienne en appui sur l'anneau 16 du premier tube mobile 11 et, d'autre part, le second tube mobile 12 applique la pièce de forme tronconique 21 sur la bouche d'enfournement 3 par l'intermédiaire de la portée 23.

Compte tenu de la liberté de mouvements entre les deux tubes 11 et 12 et la pièce de forme tronconique 21, la jupe 22 quitte la portée 23 et se positionne par rapport à la bouche d'enfournement 3.

Ainsi, la pièce 21 glisse latéralement sur la portée 23 en se centrant sur la bouche d'enfournement 3 et en se remettant de niveau, l'ensemble réagissant donc comme une rotule.

La charge exercée par les vérins associés au second tube mobile 12 est inférieure à la masse de ce second tube, si bien que celui-ci exerce une pression sur la pièce 21 par l'intermédiaire de la portée 23.

Par conséquent, grâce à cette pression et au profil conique de la pièce 21, celle-ci s'applique uniformément sur la bouche d'enfournement 3 assurant ainsi l'étanchéité avec la chambre 2 et l'enfourneuse non représentée, par l'intermédiaire des tubes télescopiques de la trémie.

Le joint inférieur 25 permet de parfaire l'étanchéité déjà obtenue entre la pièce 21 et la portée 23.

Ce montage permet donc d'empêcher, par des moyens simples, tout échappement incontrôlé des gaz hors des chambres et de s'affranchir des défauts de désalignement de l'enfourneuse par rapport aux bouches d'enfournement des chambres et de déformation en planéité du plancher supérieur de la batterie, tout en ne nécessitant aucun soin particulier de réglage au moment de la montée ou de la descente des tubes télescopiques.

Par conséquent, le positionnement des tubes télescopiques est optimum pour chaque bouche d'enfournement.

Les tubes télescopiques de cette conception exigent peu de maintenance et l'ensemble est facilement accessible pour les opérations d'inspection et de nettoyage.

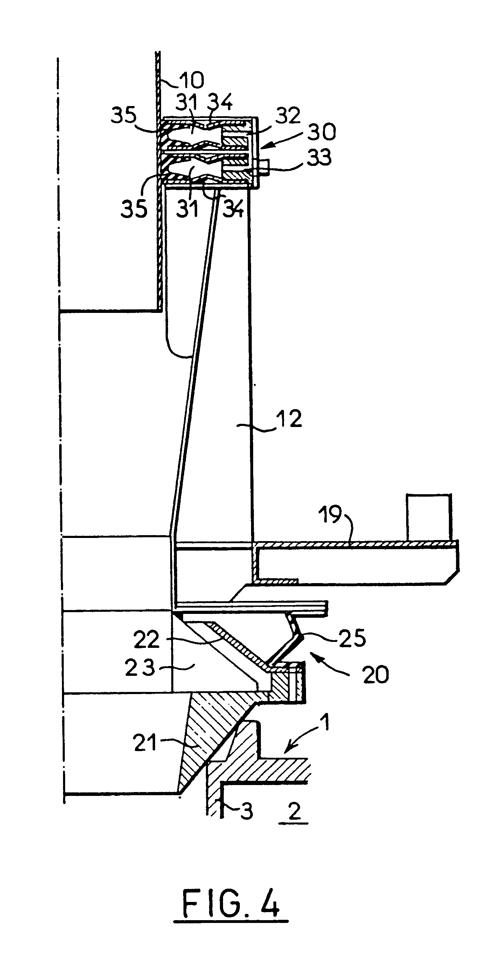

Selon une variante représentée à la Fig.4, le dispositif d'enfournement comporte un tube mobile 12 coulissant à l'extérieur du tube fixe 10 et l'étanchéité entre ces deux tubes est réalisée par un joint supérieur pouvant être gonflable désigné dans son ensemble par la référence 30.

Le tube mobile 12 supporte également des moyens de raccordement 20 avec la bouche d'enfournement 3 identiques à ceux du premier mode de réalisation.

Le joint supérieur 30, entourant le tube fixe 10, est constitué de deux chambres 31 annulaires superposées et communiquant entre elles par des passages 32.

L'une des chambres 31 est reliée par un conduit 33 à un système d'alimentation en fluide sous pression constitué par exemple par au moins un vérin de relevage du tube mobile 12.

Dans chaque chambre 31 sont disposées des parois flexibles 34 dont l'une des extrémités est fixe et dont l'autre extrémité est solidaire d'une bague 35 coulissant dans un plan perpendiculaire à l'axe du tube fixe 10.

Lorsque le tube mobile 12 se trouve en position basse et que les moyens de raccordement sont en appui sur la bouche d'enfournement 3, le fluide pénètre par l'orifice 33, remplit les chambres 31 et pousse les parois 34 ainsi que les bagues 35.

Les bagues 35 avancent et viennent se placer sur la paroi du tube fixe 10, ce qui assure l'étanchéité.

Le fluide sous pression est éventuellement fourni par l'un des vérins de relevage du tube mobile 12, si bien que la pression peut être réglable par la course dudit vérin.

Lors de la remontée du tube mobile 12, on crée, par exemple par l'intermédiaire de l'un des vérins de relevage dudit tube mobile 12, une dépression dans les chambres 31. Sous l'effet de cette dépression, les parois 34 se rétractent vers l'intérieur de telle sorte que les bagues 35 rentrent et se décollent de la paroi du tube fixe 10.

Simultanément, le tube mobile 12 remonte et les moyens de raccordement 20 se dégagent de la bouche d'enfournement 3.

## Revendications

1. Dispositif d'enfournement de charbon dans les chambres (2) d'une batterie (1) de fours de cokéfaction comportant plusieurs trémies de remplissage composées de tubes télescopiques étanches comprenant un tube fixe (10) et au moins un tube mobile (11,12) associé à des moyens de relevage et de déploiement dudit tube mobile, ledit tube mobile étant muni à sa partie inférieure de moyens de raccordement (20) avec une bouche d'enfournement (3) desdites chambres (2), caractérisé en ce que les moyens de raccordement (20) sont formés par une pièce (21) de forme sensiblement tronconique évidée, mobile par rapport au tube mobile (11,12) et comportant des organe (22,23) de retenue et de recentrage par rapport audit tube mobile (11,12) après chaque enfournement.

2. Dispositif d'enfournement selon la revendication 1, caractérisé en ce que les organes de retenue et de recentrage comportent une jupe (22) solidaire de la pièce (21) de forme sensiblement tronconique et susceptible de coopérer avec une portée (23) de forme complémentaire à ladite jupe et solidaire du tube mobile (12).

3. Dispositif d'enfournement selon les revendications 1 et 2, caractérisé en ce que le tube mobile (12) exerce une pression sur la pièce (21) de forme sensiblement tronconique par l'intermédiaire de la portée (23) et applique ladite pièce (21) uniformément sur la bouche d'enfournement.

4. Dispositif d'enfournement selon l'une des revendications 1 à 3, caractérisé en ce qu'il comporte un joint d'étanchéité inférieur (25) flexible résistant aux hautes températures et interposé entre la pièce (21) de forme sensiblement tronconique et le tube mobile (12).

5. Dispositif d'enfournement selon l'une quelconque des revendications précédentes, caractérisé en ce que la pièce (21) de forme sensiblement tronconique est formée par une couronne en acier réfractaire comportant un profil extérieur sensiblement conique.

6. Dispositif d'enfournement selon la revendication 1, caractérisé en ce qu'un joint d'étanchéité supérieur (13,30) flexible et résistant aux hautes températures est disposé au niveau du plan de chevauchement du tube mobile (12) et du tube fixe (10).

7. Dispositif d'enfournement selon la revendication 6, caractérisé en ce que le joint d'étanchéité supérieur est formé par un joint gonflable (30).

8. Dispositif selon la revendication 7, caractérisé en ce que le joint supérieur gonflable (30) est commandé par les moyens de relevage et de déploiement du tube mobile (12).

9. Dispositif d'enfournement selon la revendication 6, caractérisé en ce que le joint d'étanchéité supérieur est formé par un soufflet (13).

10. Dispositif d'enfournement selon la revendication 1, caractérisé en ce qu'il comporte deux tubes mobiles (11,12) concentriques associés chacun à des moyens de relevage et de déploiement.

**FIG.1**

FIG.2

**FIG. 3**

# FIG.4

Office européen
des brevets

**RAPPORT DE RECHERCHE EUROPEENNE**

Numero de la demande

EP 91 40 1090

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 559 390  (HARTUNG, KUHN & CO.)<br>* Revendications 1-6; figure 1 *<br>--- | 1-3,5,6,9 | C 10 B  31/04<br>B 65 G  69/18 |
| A | FR-A-3 913 320  (HARTUNG, KUHN & CO.)<br>* Revendications 1-5,7; figures 1,2 *<br>--- | 6-8,10 | |
| A | DE-A-2 431 839  (SIMON-CARVES)<br>* Revendications 1-12; figures 2,3 *<br>----- | 4 | |

|  |  |  | **DOMAINES TECHNIQUES RECHERCHES (Int. Cl.5)**<br><br>C 10 B<br>B 65 G |
|---|---|---|---|

Le présent rapport a été établi pour toutes les revendications

| Lieu de la recherche | Date d'achèvement de la recherche | Examinateur |
|---|---|---|
| LA HAYE | 25-07-1991 | MEERTENS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)